# EUROPÄISCHE PATENTANMELDUNG

(11) **EP 4 621 521 A1**
(43) Veröffentlichungstag der Anmeldung: **24.09.2025**
(21) Anmeldenummer: 24164709.8
(22) Anmeldetag: 20.03.2024
(51) Int. Cl.: G05D 23/19, F24F 11/62

(54) **VERFAHREN UND SYSTEM ZUR STEUERUNG EINES STROMGESPEISTEN HEIZ- UND/ODER KÜHLGERÄTS**

(71) Anmelder: Siemens Aktiengesellschaft, 80333 München (DE)
(72) Erfinder: SCHRECK, Sebastian, 90429 Nürnberg (DE); BAMBERGER, Joachim, 82131 Stockdorf (DE); MARTINS SVENSSON, March david, 2900-723 Setubal (PT); SZABO, Andrei, 85521 Ottobrunn (DE)
(74) Vertreter: Siemens Patent Attorneys

(57) **Zusammenfassung**

Es wird ein Verfahren zur Steuerung eines stromgespeisten Heiz- und/oder Kühlgeräts vorgeschlagen, umfassend die Schritte:
a.) Bereitstellung eines statistischen Modells für wenigstens eine durch das Gerät klimatisierte Zone zur Berechnung einer zukünftigen Zonentemperatur;
b.) Trainieren des statistischen Modells mittels historischer Daten;
c.) Ermittlung wenigstens zweier zeitlicher Verläufe (C-ZT, D-ZT) für die Zonentemperatur für die klimatisierte Zone innerhalb eines festgelegten Zeitintervalls durch eine Simulation mit dem statistischen Modell, wobei für jeden der Verläufe ein jeweiliger Modellparametersatz genutzt wird, wobei von wenigstens zwei aufgenommenen zeitlichen Verläufen (C-ZT, D-ZT) wenigstens ein zeitlicher Verlauf (C-ZT) mit dem aktuell verwendeten Modellparametersatz als ein Basisszenario erfasst wird und wenigstens ein weiterer zeitlicher Verlauf (D-ZT) mit Veränderungen gegenüber dem Basisszenario erfasst wird;
d.) Berechnung des Energiebedarfs für jeden ermittelten Verlauf, wobei der jeweils in der Simulation verwendete Modellparametersatz verwendet wird;
e.) Filterung der Verläufe als ein erster Teilschritt eines Auswahlalgorithmus, mittels eines Schwellwerts für die durchschnittliche tägliche Temperaturabweichung, wobei die Verläufe, die diesen überschreiten nicht weiter berücksichtigt werden, wobei in einem zweiten Teilschritt des Auswahlalgorithmus, ein Modellparametersatz ausgewählt wird und der Modellparametersatz mit einem der übrigen Verläufe mit dem niedrigsten oder höchsten Energiebedarf korrespondiert;
f.) Steuerung des Geräts, wobei der zuvor ausgewählten Modellparametersatz auf das Gerät angewendet wird.

Weiterhin betrifft die Erfindung ein System zur Steuerung eines stromgespeisten Heiz- und/oder Kühlgeräts (15a) für die Klimatisierung wenigstens einer klimatisierten Zone, umfassend wenigstens eine erste und eine zweite Entität (10,11), wobei die erste Entität (10) für die Durchführung der Schritte a, b, c, d und e des Verfahrens gemäß Anspruch 1 ausgebildet ist und die zweite Entität (11) für die Durchführung des Schrittes f des Verfahrens gemäß Anspruch 1 ausgebildet ist, wobei die beiden Entitäten zur Kommunikation mittels einer gemeinsamen Schnittstelle ausgebildet sind, über welche die Entität (11) erst einen Modellparametersatz bei der Entität (10) anfragt, die Entität (10) die Schritte a bis e durchführt und den ausgewählten Modellparametersatz als Antwort an die Entität (11) zurückgibt, welche schließlich Schritt f des Verfahrens durchführt.

## Beschreibung

Die Erfindung betrifft ein Verfahren zur Steuerung eines stromgespeisten Heiz- und/oder Kühlgeräts gemäß dem Oberbegriff des Patentanspruches 1 sowie ein System gemäß dem Oberbegriff des Patentanspruches 12.

In den letzten Jahren hat die zunehmende Durchdringung fluktuierender dezentraler Energieressourcen wie Photovoltaikanlagen (PV), Elektrofahrzeuge (EV), Wärmepumpen (HP) und Batterieenergiespeichersysteme (BESS) zu erheblichen Herausforderungen beim Ausgleich von Angebot und Nachfrage geführt. Dies gilt sowohl für Netzbetreiber oder unabhängige Netzbetreiber, die für den sicheren und stabilen Betrieb des Netzes verantwortlich sind, als auch für Gebäudebetreiber, die mit schwankenden Energie- und Strompreisen konfrontiert sind.

Um der Herausforderung der schwankenden Nachfrage- und Angebotsflexibilität zu begegnen, ist die Fähigkeit, Energieanlagen für eine bestimmte Zeit hoch und runter zu regulieren, unabdingbar. Diese Flexibilität kann aus verschiedenen Quellen wie Energiespeicherung, steuerbarer Erzeugung oder Lastverschiebung stammen.

In den meisten dieser Fälle ist das Flexibilitätspotenzial leicht zu ernten und zu kontrollieren, z. B. beim Laden oder Entladen eines Batteriespeichers. Für komplexere Flexibilitätspotenziale, z. B. das Abschalten einer Heizung, Lüftung und Klimatisierung (HLK) in Zeiten hohen Energiebedarfs, gelten jedoch Einschränkungen wie das Halten der Innentemperatur innerhalb einer bestimmten Grenze.

Der vorliegenden Erfindung liegt die Aufgabe zugrunde, die Flexibilität eines HLK-Systems in einem Gebäude zu nutzen, um das Potenzial zur Reduzierung oder Erhöhung der verbrauchten elektrischen Energie im Voraus abgeschätzt werden, z. B. am Vortag, um die Flexibilität in einem Energiemarkt oder über einen Aggregator zu bieten.

Die Aufgabe wird durch ein Verfahren mit den Merkmalen des unabhängigen Patentanspruches 1 sowie durch ein Systemmit den Merkmalen des unabhängigen Patentanspruches 12 gelöst. In den abhängigen Patentansprüchen sind vorteilhafte Ausgestaltungen und Weiterbildungen der Erfindung angegeben.

Das erfindungsgemäße Verfahren zur Steuerung eines stromgespeisten Heiz- und/oder Kühlgeräts, umfasst die Schritte:
a.) Bereitstellung eines statistischen Modells für wenigstens eine durch das Gerät klimatisierte Zone zur Berechnung einer zukünftigen Zonentemperatur;
b.) Trainieren des statistischen Modells mittels historischer Daten;
c.) Ermittlung wenigstens zweier zeitlicher Verläufe für die Zonentemperatur für die klimatisierte Zone innerhalb des Zeitintervalls durch eine Simulation mit dem statistischen Modell, wobei für jeden der Verläufe ein jeweiliger Modellparametersatz genutzt wird, wobei von wenigstens zwei aufgenommenen Verläufen wenigstens ein zeitlicher Verlauf mit dem aktuell verwendeten Modellparametersatz als ein Basisszenario erfasst wird und wenigstens ein weiterer zeitlicher Verlauf mit Veränderungen gegenüber dem Basisszenario erfasst wird;
d.) Berechnung des Energiebedarfs für jeden ermittelten Verlauf, wobei der jeweils in der Simulation verwendete Modellparametersatz verwendet wird;
e.) Filterung der Verläufe als ein erster Teilschritt eines Auswahlalgorithmus, mittels eines Schwellwerts für die durchschnittliche tägliche Temperaturabweichung, wobei die Verläufe, die diesen überschreiten nicht weiter berücksichtigt werden, wobei in einem zweiten Teilschritt des Auswahlalgorithmus, ein Modellparametersatz ausgewählt wird und der Modellparametersatz mit einem der übrigen Verläufe mit dem niedrigsten oder höchsten Energiebedarf korrespondiert;
f.) Steuerung des Geräts, wobei der zuvor ausgewählten Modellparametersatz auf das Gerät angewendet wird.

Das statistische Modell kann anhand lokaler historischer Daten das thermische Verhalten der klimatisierten Zone beschreiben, insbesondere kann als Charakteristik eine Hysterese ähnlich einem Tiefpass-artigen thermischen Verhalten modelliert werden.

Mit einem Tiefpass-artigen Verhalten ist, insbesondere die Dauer der Verzögerung, bis es zu einer in der Praxis messbaren Veränderung der Zonentemperatur durch Änderung der Solltemperatur kommt gemeint oder gar das Ausbleiben einer Temperaturänderung bei einer kurzweiligen Änderung der Solltemperatur.

Die klimatisierte Zone kann als ein Raum verstanden werden, für den eine Klimatisierung vorgenommen wird. Hierbei kann der zu klimatisierenden Raum insbesondere ein durch Menschen genutzter Raum oder der Innenraum eines technischen Geräts sein. Ein solches technisches Gerät kann insbesondere eine Gefriertruhe sein.

Die Historische Daten können insbesondere aufgezeichnete Temperaturen, Luftfeuchten, Windstärken und Helligkeiten innerhalb und außerhalb der Zone und die gewählte Betriebsart des Heiz- und/oder Kühlgeräts sein, wobei diese Daten in einen gemeinsamen zeitlichen und räumlichen kausalen Zusammenhang gebracht werden.

Die Änderungen im thermischen Verhalten der klimatisierten Zone können sich durch eine Veränderung der Isolation ergeben, insbesondere bei der energetischen Sanierung von Gebäudefassaden. Eine weitere Möglichkeit der Änderung des thermischen Verhaltens kann durch die räumliche Anordnung von Heiz- und/oder Kühlgeräten oder Objekten, insbesondere Möbelstücken, innerhalb der Zone erreicht werden. Weiterhin kann das dauerhafte Öffnen und Schließen von Fenstern, Türen oder anderen Öffnungen in der Zone zu einer Veränderung des thermischen Verhaltens führen.

Der Modellparametersatz wird für die Parametrierung der Simulation von Verläufen der Zonentemperatur benötigt und kann alle Parameter umfassen, welche in Form von historischen Daten aufgezeichnet und für das Modelltraining verwendeten wurden.

Der durch die Erfindung erzielte Vorteil beruht auf der Ausschöpfung von Flexibilisierungspotentialen für die Stromversorgung von Heiz- und Kühlgeräten unter Einhaltung einer geforderten Zonentemperatur.

Flexibilisierungspotentiale für die Stromversorgung von Heiz- und Kühlgeräten können ein Maß dafür sein, wann, wie lang und wie hoch eine Änderung der Abnahme von elektrischer Energie durch diese Geräte möglich ist, ohne sich zu weit von der geforderten Zonentemperatur zu entfernen. Die Ausschöpfung dieser Flexibilisierungspotentiale spielt eine zentrale Rolle für die Stabilisierung der öffentlichen Energienetze, wobei verteilte Systeme individuell Flexibilisierungspotentiale ausnutzen, um den Energiebedarf punktuell zu erhöhen oder zu senken wenn ein Über- oder Unterangebot an Energie im Stromnetz vorliegt, wobei darüber hinaus insbesondere die Einhaltung der Zonentemperatur berücksichtig wird.

Das erfindungsgemäße System zur Steuerung eines stromgespeisten Heiz- und/oder Kühlgeräts für die Klimatisierung wenigstens einer klimatisierten Zone, umfasst wenigstens eine erste und eine zweite Entität, wobei die erste Entität für die Durchführung der ersten fünf Schritte des Verfahrens gemäß Anspruch 1 ausgebildet ist und die zweite Entität für die Durchführung des sechsten Schritts des Verfahrens gemäß Anspruch 1 ausgebildet ist, wobei die beiden Entitäten zur Kommunikation mittels einer gemeinsamen Schnittstelle ausgebildet sind, über welche die zweite Entität erst einen Modellparametersatz bei der ersten Entität anfragt, die erste Entität die Schritte a bis e durchführt und den ausgewählten Modellparametersatz als Antwort an die zweite Entität zurückgibt, welche schließlich Schritt f des Verfahrens durchführt.

Die Entität aus der Elektrotechnik und Informatik ist ein Ding (physisch oder nichtphysisch), dass eindeutig existiert, insbesondere kann die nicht-physische Existenz durch die Beschreibung des Dings als reinen Software-Agenten und die physische Existenz durch Instanziierung als Steuerung oder Computer ausgedrückt werden. Die Implikation hierbei ist, dass verschiedene Entitäten auf einer gemeinsamen Hardware betrieben werden können, während auch ein Eins-zu-Eins-Verhältnis zwischen Software-Agent und Hardware möglich ist.

Der durch die Erfindung erzielte Vorteil beruht auf der Ausschöpfung von Flexibilisierungspotentialen für die Stromversorgung von Heiz- und Kühlgeräten unter Einhaltung einer geforderten Zonentemperatur, wobei durch die modulare Aufteilung der erfindungsgemäßen Verfahrensschritte auf zwei verschiedene Entitäten eine einfachere Möglichkeit zum Update des Systems geschaffen wird, Insbesondere können Entitäten entweder als Software-Agenten und/oder Hardwaremodule austauschbar ausgebildet sein.

In einer vorteilhaften Weiterbildung der Erfindung können als historische Daten die erreichte Zonentemperatur bei einer ausgewählter Betriebsart des Geräts und/oder die Wetterlage außerhalb der klimatisierten Zone und/oder die Helligkeit außerhalb der klimatisierten Zone verwendet werden.

Dadurch kann vorteilhafterweise ein statistisches Modell mit stabileren Schätzergebnissen realisiert werden.

Gemäß einer vorteilhaften Ausgestaltung der Erfindung kann bei der Ermittlung der zeitlichen Verläufe von zukünftigen Zonentemperaturen prädiktive Daten umfassend eine vorhergesagte Wetterlage und/oder eine vorhergesagte Lufttemperatur außerhalb der klimatisierten Zone verwendet werden.

Dadurch können vorteilhafterweise weitere Parameter für eine realistischere Simulation möglicher Verläufe der Zonentemperatur bereit gestellt werden.

In einer vorteilhaften Weiterbildung der Erfindung kann als statistisches Modell ein multivariates Modell der linearen Regression mit wenigstens einem Bestrafungsterm verwendet werden.

Die Einführung eines Bestrafungsterms ermöglicht vorteilhafterweise ein sog. Over Fitting des statistischen Modells zu vermeiden.

Das Over Fitting eines Regressionsmodells beschreibt einen Effekt, wobei das Modell für einen konkreten Lerndatensatz hervorragend angepasst ist und hierbei auch Anomalien, die nur in diesem einen Lerndatensatz auftauchen, sog. Outlier oder auch Ausreißer, fälschlicherweise im Training des Modells berücksichtigt. Ein Bestrafungsterm kann hierbei die Verfälschung des Modells durch diese Anomalien dämpfen.

Gemäß einer vorteilhaften Ausgestaltung der Erfindung kann der Bestrafungsterm eine Abweichung vom Grenzwert der zukünftigen Zonentemperatur, ab einem Schwellwert, bestrafen, wobei die Abweichung aus einer Wurzel aus einer mittleren quadratischen Abweichung für ein festgelegtes Zeitintervall berechnet wird.

Dadurch wird eine genaue Einhaltung der künftigen Zonentemperatur gewährleistet.

In einer vorteilhaften Weiterbildung der Erfindung kann der Grenzwert für die Zonentemperatur als ein Intervall aus Minimalwert und Maximalwert angegeben und die zukünftigen Zonentemperatur innerhalb dieses Intervalls geregelt werden.

Dadurch kann eine gewisse Toleranz in der zu erreichenden Zonentemperatur hinterlegt werden, was vorteilhafterweise zu einer größeren Auswahl geeigneter Verläufe und damit zu mehr Auswahlmöglichkeiten führen kann.

Gemäß einer vorteilhaften Ausgestaltung der Erfindung kann die Betriebsart des Geräts als in der Simulation zu variierender Modellparametersatzes bereitgestellt werden.

Da die Einstellung der Betriebsart die effektivste Art der Regulation der Zonentemperatur darstellen kann, ermöglicht die Simulation anhand verschiedener Betriebsarten mit hoher Sicherheit die Ausgabe wenigstens eines Verlaufs der durch eine Steuerung des Heiz- und/oder Kühlgeräts erreichbar ist. Die Menge an Simulationsdurchgängen kann dadurch vorteilhafterweise reduziert werden.

In einer vorteilhaften Weiterbildung der Erfindung kann das zeitweise Einschalten und Ausschalten des Geräts als in der Simulation zu variierende Modellparametersatzes angewendet werden.

Dadurch können vorteilhafterweise Verläufe simuliert werden, die eine schnellere Regulation der Zonentemperatur unter gleichzeitiger Maximierung der Energieeinsparung ermöglichen.

Gemäß einer vorteilhaften Ausgestaltung der Erfindung kann der Auswahlalgorithmus in einem ersten Teilschritt die Verläufe die einen Schwellwert für eine durchschnittliche tägliche Temperaturabweichung überschreiten herausfiltern, diese Verläufe nicht weiter berücksichtigten und in einem zweiten Teilschritt der Auswahlalgorithmus die übrigen Verläufe die einen Schwellwert für einen durchschnittlichen Energiebedarf überschreiten herausfiltern und diese Verläufe ebenfalls nicht weiter berücksichtigen, wobei der hierfür genutzte Wert des durchschnittlichen Energiebedarfs aus einer Auswahl von festgelegten Bedarfen zu ausgewählten Tageszeiten bestimmt wird und in einem dritten Teilschritt aus den letztlich übrigen Verläufen, der Verlauf mit dem niedrigsten Gesamtenergiebedarf, ausgewählt wird, wobei für die zeitweise Steigerung des Energiebedarfs die Teilschritte zwei und drei invertiert durchgeführt werden.

Dadurch kann vorteilhafterweise die Auswahl bestimmter Verläufe tageszeitgenau durchgeführt werden, was beispielsweise für eine Reaktion auf einen tageszeitabhängigen Energieengpass oder Überangebot im Stromnetz genutzt werden kann.

In einer vorteilhaften Weiterbildung der Erfindung kann durch den Auswahlalgorithmus im zweiten Teilschritt, für den Fall einer Herausfilterung aller Verläufe, wenigstens der Verlauf mit dem geringsten durchschnittlichen Energiebedarf an den dritten Teilschritt übergeben werden.

Dadurch kann vorteilhafterweise erreicht werden, dass das Verfahren immer wenigstens einen Verlauf als Ergebnis liefert.

Gemäß einer vorteilhaften Ausgestaltung der Erfindung kann das erneute Training des statistischen Modells in festen zeitlichen Abständen und/oder bei regelmäßiger Abweichung vom Grenzwert für die Zonentemperatur erfolgen, wobei diese regelmäßige Abweichung durch einen absoluten Wert festgelegt wird.

Dadurch wird vorteilhafterweise erreicht, dass das statistische Modell laufend aktuell gehalten wird und fortwährend realistische Ergebnisse liefert.

In einer vorteilhaften Weiterbildung der Erfindung kann die erste Entität und/oder zweite Entität als jeweils eine Rechnereinheit am einem Netzwerkrand ausgebildet sein, wobei auch ein gemeinsamer Betrieb beider Entitäten auf einer Recheneinheit möglich ist.

Dadurch kann vorteilhafterweise Rechenleistung an den Netzwerkrand gebracht werden, was sich positiv auf die Netzwerklast durch lokale Verarbeitung von Daten auswirkt und Reaktionszeiten des Systems verkürzt.

Gemäß einer vorteilhaften Ausgestaltung der Erfindung kann die Abfrage der ersten Entität durch die zweite Entität als Reaktion auf eine Kursschwankung im Strompreis ausgebildet sein, wobei Höhe und Vorzeichen der Kursschwankung auf die reagiert werden soll als Parameter ausgebildet sind.

Dadurch kann vorteilhafterweise auf Ereignisse im Stromnetz reagiert werden, auch wenn insbesondere keine Informationen über die Netzauslastung vorliegen, sondern nur Tarifänderungen bekannt sind.

In einer vorteilhaften Weiterbildung der Erfindung kann die zweite Entität des Systems zur Steuerung wenigstens eines stromgespeisten Heiz- und/oder Kühlgeräts mittels eines Steuergeräts und unter Anwendung des Modellparametersatzes als Rückgabewert von der ersten Entität ausgebildet sein.

Dadurch ist eine Steuerung des Heiz- und/oder Kühlgeräts durch die zweite Entität möglich, wobei über eine Schnittstelle ein beliebiges Steuergerät mit insbesondere der Betriebsart, die im Modelparametersatz hinterlegt ist, gesteuert werden kann.

Weitere Vorteile, Merkmale und Einzelheiten der Erfindung ergeben sich aus den im Folgenden beschriebenen Ausführungsbeispielen sowie anhand der Zeichnungen. Dabei zeigen schematisiert:
- Figur 1: ein Blockdiagramm als Ausführungsbeispiel für das erfindungsgemäße System, welches für die Ausführung des erfindungsgemäßen Verfahrens ausgebildet ist; und
- Figur 2: ein Ausführungsbeispiel für die Visualisierung von Verläufen der Zonentemperatur für eine klimatisierte Zone als Ergebnisse mehrerer Simulationsdurchgänge.

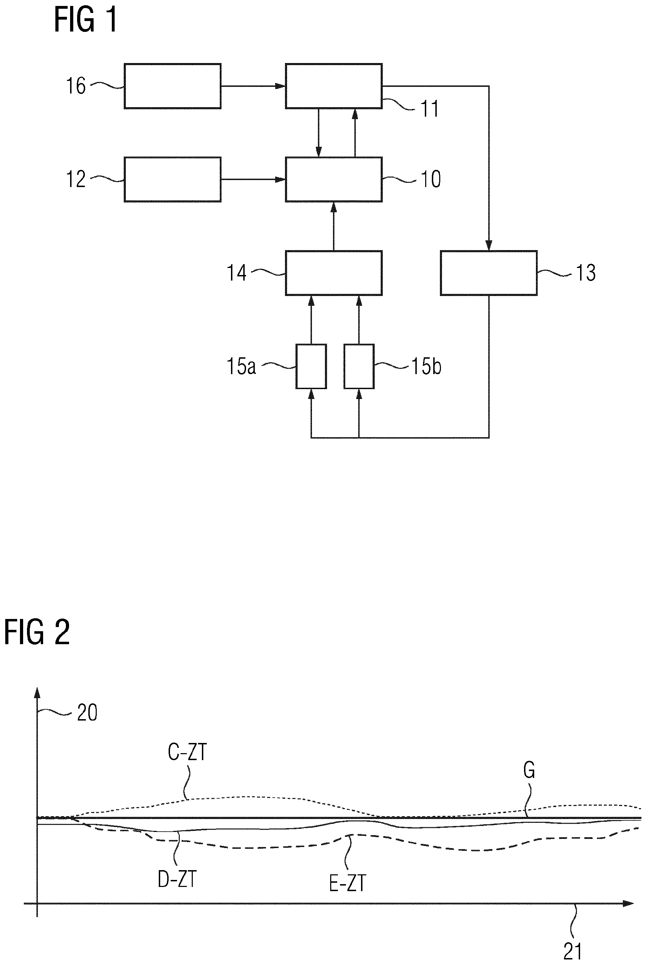

Die Figur 1 zeigt schematisch ein Blockdiagramm, welches die Entität 10 und die Entität 12 in den Kontext einer Anlage zur Gebäudeklimatisierung zeigt.

Gemäß der vorliegenden Ausgestaltung erfasst die Entität 10 Wetterdaten aus einem Wettervorhersagesystem 12 und Daten aus einem Gebäudeverwaltungssystems 14, insbesondere können das Daten über gewählte Betriebsarten oder die aktuelle Zonentemperatur sein.

Über die Verbindung mittels zweier unidirektionaler Pfeile zwischen der Entität 10 und der Entität 11 wird die Schnittstelle verdeutlicht, über welche die Entität 11 einen Modellparametersatz anfragt und diesen als Antwort von der Entität 10 erhält.

Eine Anfrage an die Entität 10 durch die Entität 11 kann im Ausführungsbeispiel durch die Erfassung und Auswertung von Daten aus einem Energiemarkt 16 resultieren, insbesondere kann die Entität 11 durch Anfrage eines neuen Modellparametersatzes auf ein Über- oder Unterangebot am Energiemarkt 16 reagieren.

Die Entität 11 ist über einen Pfeil mit einem Steuerungsgerät 13 verbunden, damit wird verdeutlich, dass die Entität 11, den ausgewählten Modellparametersatz, insbesondere die Betriebsart, auf das Steuergerät anwendet.

Über das Steuergerät 13 werden im Ausführungsbeispiel die Wärme- und/oder Kältemaschinen 15a, b gesteuert und diese wiederrum melden Betriebsdaten an das Gebäudeverwaltungssystem 14.

Die Figur 2 zeigt ein Ausführungsbeispiel für das Ergebnis einer Simulation
der Verläufe C-ZT, D-ZT und E-ZT für die Zonentemperatur, welche auf einem Diagramm mit einer Achse für die Zeit 21 und einer Achse für die Temperatur 20 aufgetragen sind. Die waagerechte Gerade im Diagramm verdeutlicht den Grenzwert G für die Zonentemperatur. Der Algorithmus gemäß Anspruch 1 zielt durch Auswertung nach vorgegebenen Metriken schließlich auf die Auswahl eines Verlaufs und dessen assoziierten Modellparametersatz, welcher die Gerade für den Grenzwert G am besten approximiert.

In diesem Ausführungsbeispiel wird der Grenzwert G für die Zonentemperatur, als Gerade angenommen, die Ausführung als eine beliebige Kurve ist möglich, insbesondere wenn die Temperatur nachts abgesenkt werden soll.

Gleichartige, gleichwertige oder gleichwirkende Elemente können in einer der Figuren oder in den Figuren mit denselben Bezugszeichen versehen sein.

Obwohl die Erfindung im Detail durch die bevorzugten Ausführungsbeispiele näher illustriert und beschrieben wurde, so ist die Erfindung nicht durch die offenbarten Beispiele eingeschränkt oder andere Variationen können vom Fachmann hieraus abgeleitet werden, ohne den Schutzumfang der Erfindung zu verlassen.

### Bezugszeichenliste

- 10: Erste Entität
- 11: Zweite Entität
- 12: Wettervorhersagesystem
- 13: Steuerungsgerät für stromgespeiste Heiz- und/oder Kühlgeräte
- 14: Gebäudeverwaltungssystem
- 15a,b: Wärme- und/oder Kältemaschine
- 16: Energiemarkt
- C-ZT: Zonentemperatur im Basisszenario
- D-ZT: Zonentemperatur im Szenario 1
- E-ZT: Zonentemperatur im Szenario N
- G: Grenzwert Zonentemperatur
- 20: Temperatur
- 21: Zeit

## Patentansprüche

1. Verfahren zur Steuerung eines stromgespeisten Heiz- und/oder Kühlgeräts, umfassend die Schritte:
a.) Bereitstellung eines statistischen Modells für wenigstens eine durch das Gerät klimatisierte Zone zur Berechnung einer zukünftigen Zonentemperatur;
b.) Trainieren des statistischen Modells mittels historischer Daten;
c.) Ermittlung wenigstens zweier zeitlicher Verläufe (C-ZT, D-ZT) für die Zonentemperatur für die klimatisierte Zone innerhalb eines festgelegten Zeitintervalls durch eine Simulation mit dem statistischen Modell, wobei für jeden der Verläufe ein jeweiliger Modellparametersatz genutzt wird, wobei von wenigstens zwei aufgenommenen zeitlichen Verläufen (C-ZT, D-ZT) wenigstens ein zeitlicher Verlauf (C-ZT) mit dem aktuell verwendeten Modellparametersatz als ein Basisszenario erfasst wird und wenigstens ein weiterer zeitlicher Verlauf (D-ZT) mit Veränderungen gegenüber dem Basisszenario erfasst wird;
d.) Berechnung des Energiebedarfs für jeden ermittelten Verlauf, wobei der jeweils in der Simulation verwendete Modellparametersatz verwendet wird;
e.) Filterung der Verläufe als ein erster Teilschritt eines Auswahlalgorithmus, mittels eines Schwellwerts für die durchschnittliche tägliche Temperaturabweichung, wobei die Verläufe, die diesen überschreiten nicht weiter berücksichtigt werden, wobei in einem zweiten Teilschritt des Auswahlalgorithmus, ein Modellparametersatz ausgewählt wird und der Modellparametersatz mit einem der übrigen Verläufe mit dem niedrigsten oder höchsten Energiebedarf korrespondiert;
f.) Steuerung des Geräts, wobei der zuvor ausgewählten Modellparametersatz auf das Gerät angewendet wird.

2. Verfahren gemäß Anspruch 1, bei dem als historische Daten die erreichte Zonentemperatur bei einer ausgewählter Betriebsart des Geräts und/oder die Wetterlage außerhalb der klimatisierten Zone und/oder die Helligkeit außerhalb der klimatisierten Zone verwendet werden.

3. Verfahren gemäß Anspruch 2, bei dem bei der Ermittlung der zeitlichen Verläufe von zukünftigen Zonentemperaturen prädiktive Daten umfassend eine vorhergesagte Wetterlage und/oder eine vorhergesagte Lufttemperatur außerhalb der klimatisierten Zone verwendet werden.

4. Verfahren gemäß einem der vorhergehenden Ansprüche, bei dem als statistisches Modell ein multivariates Modell der linearen Regression mit wenigstens einem Bestrafungsterm verwendet wird.

5. Verfahren gemäß Anspruch 4, bei dem der Bestrafungsterm eine Abweichung vom Grenzwert der zukünftigen Zonentemperatur, ab einem Schwellwert, bestraft, wobei die Abweichung aus einer Wurzel aus einer mittleren quadratischen Abweichung für ein festgelegtes Zeitintervall berechnet wird.

6. Verfahren gemäß einem der vorhergehenden Ansprüche, **dadurch gekennzeichnet, dass** der Grenzwert für die Zonentemperatur als ein Intervall aus Minimalwert und Maximalwert angegeben und die zukünftigen Zonentemperatur innerhalb dieses Intervalls geregelt wird.

7. Verfahren gemäß einem der vorhergehenden Ansprüche, **dadurch gekennzeichnet, dass** die Betriebsart des Geräts als in der Simulation zu variierender Modellparametersatzes bereitgestellt wird.

8. Verfahren gemäß einem der vorhergehenden Ansprüche, **dadurch gekennzeichnet, dass** das zeitweise Einschalten und Ausschalten des Geräts als in der Simulation zu variierende Modellparametersatzes angewendet wird.

9. Verfahren gemäß einem der vorherigen Ansprüche, **dadurch gekennzeichnet, dass** der Auswahlalgorithmus in einem ersten Teilschritt die Verläufe die einen Schwellwert für eine durchschnittliche tägliche Temperaturabweichung überschreiten herausfiltert, diese Verläufe nicht weiter berücksichtigt werden und in einem zweiten Teilschritt der Auswahlalgorithmus die übrigen Verläufe die einen Schwellwert für einen durchschnittlichen Energiebedarf überschreiten herausfiltert und diese Verläufe ebenfalls nicht weiter berücksichtigt werden, wobei der hierfür genutzte Wert des durchschnittlichen Energiebedarfs aus einer Auswahl von festgelegten Bedarfen zu ausgewählten Tageszeiten bestimmt wird und in einem dritten Teilschritt aus den letztlich übrigen Verläufen, der Verlauf mit dem niedrigsten Gesamtenergiebedarf, ausgewählt wird, wobei für die zeitweise Steigerung des Energiebedarfs die Teilschritte zwei und drei invertiert durchgeführt werden.

10. Verfahren gemäß Anspruch 9, **dadurch gekennzeichnet, dass** durch den Auswahlalgorithmus im zweiten Teilschritt, für den Fall einer Herausfilterung aller Verläufe, wenigstens der Verlauf mit dem geringsten durchschnittlichen Energiebedarf an den dritten Teilschritt übergeben wird.

11. Verfahren gemäß einem der vorherigen Ansprüche, **dadurch gekennzeichnet, dass** das erneute Training des statistischen Modells in festen zeitlichen Abständen und/oder bei regelmäßiger Abweichung vom Grenzwert für die Zonentemperatur erfolgt, wobei diese regelmäßige Abweichung durch einen absoluten Wert festgelegt wird.

12. System zur Steuerung eines stromgespeisten Heiz- und/oder Kühlgeräts (15a) für die Klimatisierung wenigstens einer klimatisierten Zone, umfassend wenigstens eine erste und eine zweite Entität (10,11), wobei die erste Entität (10) für die Durchführung der Schritte a, b, c, d und e des Verfahrens gemäß Anspruch 1 ausgebildet ist und die zweite Entität (11) für die Durchführung des Schrittes f des Verfahrens gemäß Anspruch 1 ausgebildet ist, wobei die beiden Entitäten zur Kommunikation mittels einer gemeinsamen Schnittstelle ausgebildet sind, über welche die Entität (11) erst einen Modellparametersatz bei der Entität (10) anfragt, die Entität (10) die Schritte a bis e durchführt und den ausgewählten Modellparametersatz als Antwort an die Entität (11) zurückgibt, welche schließlich Schritt f des Verfahrens durchführt.

13. System gemäß Anspruch 12, **gekennzeichnet dadurch, dass** die erste Entität und/oder zweite Entität als jeweils eine Rechnereinheit an einem Netzwerkrand ausgebildet ist.

14. System gemäß Anspruch 12, **gekennzeichnet dadurch, dass** die Abfrage der ersten Entität durch die zweite Entität als Reaktion auf eine Kursschwankung im Strompreis ausgebildet ist, wobei Höhe und Vorzeichen der Kursschwankung auf die reagiert werden soll als Parameter ausgebildet sind.

15. System gemäß Anspruch 12, **gekennzeichnet dadurch, dass** die zweite Entität (11) zur Steuerung wenigstens eines stromgespeisten Heiz- und/oder Kühlgeräts (15a) mittels eines Steuergeräts (13) und unter Anwendung des Modellparametersatzes als Rückgabewert von der ersten Entität (10) ausgebildet ist.
